(19) Europäisches Patentamt
European Patent Office
Office européen des brevets

(11) **EP 4 738 209 A1**

(12) **EUROPEAN PATENT APPLICATION**

(43) Date of publication:
06.05.2026 Bulletin 2026/19

(21) Application number: 25212259.3

(22) Date of filing: 30.10.2025

(51) International Patent Classification (IPC):
*G06N 20/20* (2019.01)   *G06F 17/18* (2006.01)
*G06F 18/27* (2023.01)

(52) Cooperative Patent Classification (CPC):
**G06N 20/20; G06F 17/18; G06F 18/27;**
G06F 2218/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 31.10.2024 JP 2024192040

(71) Applicant: **FUJITSU LIMITED**
**Kawasaki-shi, Kanagawa 211-8588 (JP)**

(72) Inventors:
• **TOYOTA, Kodai**
**Kawasaki-shi, Kanagawa, 211-8588 (JP)**
• **URA, Akira**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **MACHINE LEARNING PROGRAM, MACHINE LEARNING METHOD, AND INFERENCE PROGRAM**

(57) A machine learning program for causing a computer to execute processing including: determining a window interval having a peak and a feature related to the window interval based on a spectrum related to partial autocorrelation for each of the plurality of window intervals indicating a variation of an index of time-series data; and performing machine learning of a model that predicts the variation of the index after a first time point from the variation of the index before the first time point using the determined feature.

FIG.8

**Description**

[Technical Field]

The embodiments discussed herein are directed to a machine learning program, a machine learning method, and an inference program.

[Background Technique]

For example, sales prediction and demand prediction can be performed by time-series prediction using a time-series prediction model.

In order to train a highly accurate time-series prediction model, it is important to design a time-series feature that well describes a time-series feature (a trend, a seasonal characteristic, or the like).

Here, the time-series feature is calculated using data of a certain period (window) in the past from the prediction time point, and the time-series feature is generated for each period. How to select the period and how to select a large number of time-series features to be generated are not automated, and it takes a lot of time in the process of feature engineering.

As a method of selecting a feature, for example, RFE (Recursive Feature Elimination) is known. In the RFE, first, a model is trained using all features. Thereafter, the model is retrained while excluding the feature having the lowest index (such as feature importance or the like) for evaluating the importance of the feature. The exclusion of the feature and the retraining of the model are repeated until the total number of the features reaches the number designated by the analyst.

In addition, Auto sklearn, which is one implementation in Automated machine learning (AutoML) that automates a part of the process of machine learning, is also known.

In the Auto sklearn, the time-series feature data is extracted, the time-series feature data is converted into a table, and the converted table data is input to the AutoML to perform prediction.

[Prior Art Reference]

[Patent Document]

[Patent Document 1] Japanese Laid-open Patent Publication No. 2019-159760 A
[Patent Document 2] Japanese National Publication of International Patent Application No. 2023-544011 A
[Patent Document 3] Japanese Laid-open Patent Publication No. 2012-27880 A
[Patent Document 4] US Patent Application Publication No. 2015/0377938 A
[Patent Document 5] US Patent Application Publication No. 2020/0242483 A

[Summary of Invention]

[Problems to be Solved by Invention]

However, in the RFE, the model needs to be retrained every time one feature is excluded, and the calculation cost is very high.

On the other hand, the Auto sklearn is a tool for table data, and since information at each time point of the time series is input as a table, trend information such as autocorrelation at the time of model selection cannot be included, and the result does not take into consideration the period of the time-series data.

In one aspect, an object of the present embodiment is to enable output of a highly accurate prediction result in a short time even for unstabilized time-series data.

[Means to Solve Problems]

According to an aspect of the embodiments, a machine learning program for causing a computer to execute process including: determining a window interval having a peak and a feature related to the window interval based on a spectrum related to partial autocorrelation for each of the plurality of window intervals indicating a variation of an index of time-series data; and performing machine learning of a model that predicts the variation of the index after a first time point from the variation of the index before the first time point using the determined feature.



[Effect of Invention]

According to one embodiment, it is possible to output a highly accurate prediction result in a short time even for unstabilized time-series data.

[Brief Description of Drawings]

FIG. 1 is a diagram schematically illustrating a configuration of an information processing system according to an embodiment;
FIG. 2 is a block diagram illustrating a hardware (HW) configuration example of a computer included in the information processing system according to the embodiment;
FIG. 3 is a diagram illustrating an example of configuration of a corpus in the information processing system according to the embodiment;
FIG. 4 is a diagram illustrating a time-series dataset in the information processing system according to the embodiment;
FIG. 5 is a diagram illustrating Ljung-Box test;
FIG. 6 is a diagram illustrating a lag feature in the information processing system according to the embodiment;
FIG. 7 is a diagram illustrating a time window feature in the information processing system according to the embodiment;
FIG. 8 is a diagram illustrating an example of spectrum;
FIG. 9 is a diagram illustrating an example of trigonometric function feature in the information processing system according to the embodiment;
FIG. 10 is a flowchart illustrating processing of the corpus creation unit of the information processing system according to the embodiment;
FIG. 11 is a flowchart illustrating details of the processing of step A3 of the flowchart illustrated in FIG. 10;
FIG. 12 is a flowchart illustrating details of the processing of step A4 of the flowchart illustrated in FIG. 10;
FIG. 13 is a flowchart illustrating details of the processing of step A6 of the flowchart illustrated in FIG. 10;
FIG. 14 is a flowchart illustrating processing on a new time-series dataset in the information processing system according to the embodiment;
FIG. 15 is a flowchart illustrating processing related to new time-series prediction based on a new time-series dataset in the information processing system according to the embodiment; and
FIG. 16 is a diagram illustrating an example of dataset in the information processing system according to the embodiment.

[Description of Embodiment(s)]

Hereinafter, embodiments related to the present machine learning program, machine learning method, and inference program will be described with reference to the drawings. However, the embodiments described below are merely examples, and there is no intention to exclude the application of various modifications and techniques that are not explicitly described in the embodiments. That is, the present embodiment can be variously modified and implemented without departing from the gist thereof. Each drawing is not intended to include only the components illustrated in the drawing but may include other functions and the like.

In the present embodiment, a plurality of pieces of time-series data is prepared, a combination of a type of feature and model algorithm that yields the highest accuracy is determined for each of the plurality of pieces of time-series data, and a corpus in which the result is registered in association with metadata of each piece of time-series data is created. Next, when a new time series is predicted, a time series having the most similar meta-feature is retrieved from the corpus, and a type of feature and a model algorithm optimal for the time series are returned. Several terms for the following description are defined.

Time-series data: a set $\{y_t\}^T_{t=1}$ of values $y_t$ observed at each time point $t = 1, 2, \cdots, T$. Static information such as the address of the store is not included.

Time-series dataset: a set of a plurality of pieces of time-series data. A set is defined as $D_i$, and $D_i = \{y_{j.t}\}^T_{t=1}$ ($j = 1, 2, \cdots n_i$) is defined. The subscript i is an ID of the time-series dataset. In addition, the subscript j is an ID of each time series included in $D_i$, thereby uniquely identifying the time series in $D_i$.

Set of time-series datasets: a set of time-series datasets $D_i$. $\{D_i\}$ ($i = 1, 2, \cdots, N$)

(A) Configuration

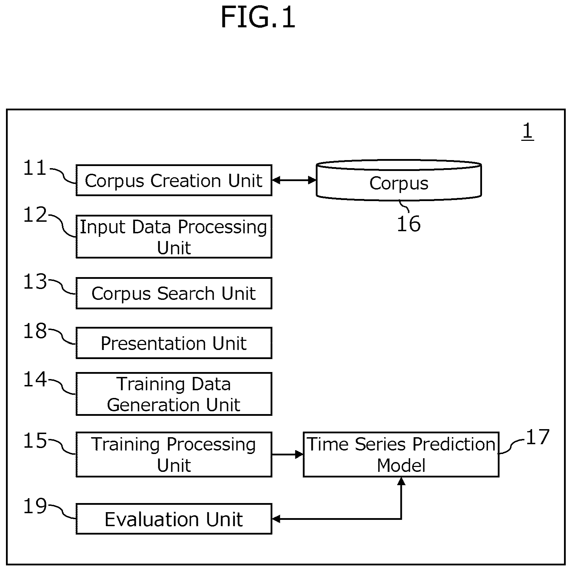

FIG. 1 is a diagram schematically illustrating a configuration of an information processing system 1 according to an embodiment.

The information processing system 1 selects a time-series feature and a model algorithm for obtaining a highly accurate result in a time-series prediction model 17.

The time-series prediction model 17 is configured using a neural network or classical machine learning. The time-series prediction model 17 is an example of a model that predicts an objective variable value after a prediction execution time point using a feature extracted using the data in the past from the prediction time point.

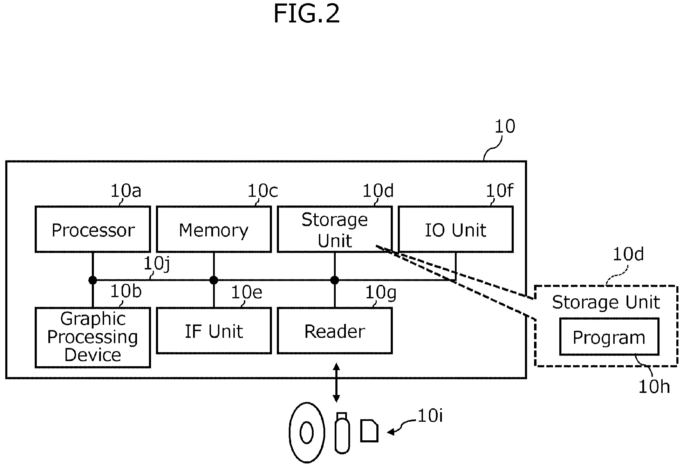

The time-series prediction model 17 may be a hardware circuit or a virtual network configured by software that connects layers virtually built on a computer program by a processor 10a described later with reference to FIG. 2.

The information processing system 1 performs training (machine learning) of the time-series prediction model 17 using the time-series feature recommended by the corpus and the model algorithm (training phase). The time-series data used for the corpus creation process performed prior to the training of the time-series prediction model 17 may be referred to as time-series data for corpus creation.

time-series data may be input to the information processing system 1 from a terminal device or an information processing device (not illustrated).

(A-1) Hardware Configuration Example

FIG. 2 is a block diagram illustrating a hardware (HW) configuration example of a computer 10 included in the information processing system 1 according to the embodiment. In a case where a plurality of computers is used as the HW resource for implementing the functions of the information processing system 1, each computer may have the HW configuration illustrated in FIG. 2.

As illustrated in FIG. 2, the computer (information processing device) 10 may include, for example, a processor 10a, a graphic processing device 10b, a memory 10c, a storage unit 10d, an interface (IF) unit 10e, an input/output (IO) unit 10f, and a reader 10g as a HW configuration.

The processor 10a is an example of an arithmetic processing device that performs various controls and calculations and is a controller. The processor 10a may be communicably connected to each block in the computer 10 via a bus 10j. Note that the processor 10a may be a multiprocessor including a plurality of processors, may be a multi-core processor including a plurality of processor cores, or may have a configuration including a plurality of multi-core processors.

Examples of the processor 10a include an integrated circuit (IC) such as CPU, MPU, APU, DSP, ASIC, or FPGA. Note that a combination of two or more of these integrated circuits may be used as the processor 10a. CPU is an abbreviation for Central Processing Unit, and MPU is an abbreviation for Micro Processing Unit. APU is an abbreviation for Accelerated Processing Unit. DSP is an abbreviation for Digital Signal Processor, ASIC is an abbreviation for Application Specific IC, and FPGA is an abbreviation for Field-Programmable Gate Array.

The graphic processing device 10b performs screen display control on an output device such as a monitor in the IO unit 10f. The graphic processing device 10b may have a configuration as an accelerator that executes machine learning processing and inference processing using a machine learning model. Examples of the graphic processing device 10b include various arithmetic processing devices, for example, an integrated circuit (IC) such as a graphics processing unit (GPU), an APU, a DSP, an ASIC, or an FPGA.

The memory 10c is an example of HW that stores information such as various data and programs. Examples of the memory 10c include one or both of a volatile memory such as a dynamic random access memory (DRAM) and a nonvolatile memory such as a persistent memory (PM).

The storage unit 10d is an example of HW that stores information such as various data and programs. Examples of the storage unit 10d include various storage devices such as a magnetic disk device such as a hard disk drive (HDD), a semiconductor drive device such as a solid state drive (SSD), and a nonvolatile memory. Examples of the nonvolatile memory include a flash memory, a storage class memory (SCM), and a read only memory (ROM).

The storage unit 10d may store a program 10h (machine learning program, inference program) that implements all or a part of various functions of the computer 10.

For example, the processor 10a of the computer 10 can realize a causal analysis function to be described later by loading the program 10h stored in the storage unit 10d in the memory 10c and executing the program.

The IF unit 10e is an example of a communication IF that controls connection and communication between the computer 10 and a network device, another computer, or the like. For example, the IF unit 10e may include an adapter conforming to local area network (LAN) such as Ethernet®, optical communication such as fibre channel (FC), or the like. The adapter may support one or both of wireless and wired communication systems.

For example, the computer 10 may be communicably connected to another computer or the like via the IF unit 10e and a network. Note that the program 10h may be downloaded from a network to the computer 10 via the communication IF and stored in the storage unit 10d.

The IO unit 10f may include one or both of an input device and an output device. Examples of the input device include a keyboard, a mouse, and a touch panel. Examples of the output device include a monitor, a projector, a printer, and the like. In addition, the IO unit 10f may include a touch panel or the like in which an input device and a display device are integrated. The output device may be connected to the graphic processing device 10b.

The reader 10g is an example of a reader that reads information on data and programs recorded on a recording medium 10i. The reader 10g may include a connection terminal or a device to which the recording medium 10i can be connected or inserted. Examples of the reader 10g include an adapter conforming to a universal serial bus (USB) or the like, a drive device that accesses a recording disk, a card reader that accesses a flash memory such as an SD card, and the like. Note that the program 10h may be stored in the recording medium 10i, and the reader 10g may read the program 10h from the recording medium 10i and store the program in the storage unit 10d. The program 10h includes a machine learning program and an inference program.

Examples of the recording medium 10i include a non-transitory computer-readable recording medium such as a magnetic/optical disk or a flash memory. Examples of the magnetic/optical disk include a flexible disk, a compact disc (CD), a digital versatile disc (DVD), a Blu-ray disc, and a holographic versatile disc (HVD). Examples of the flash memory include semiconductor memories such as a USB memory and an SD card.

The above-described HW configuration of the computer 10 is an example. Therefore, HW in the computer 10 may be increased or decreased (for example, addition or deletion of an optional block), divided, integrated in an optional combination, or a bus may be added or deleted as appropriate.

(A-2) Functional Configuration Example

As illustrated in FIG. 1, the information processing system 1 may have functions as a corpus creation unit 11, an input data processing unit 12, a corpus search unit 13, a training data creation unit 14, a training processing unit 15, the time-series prediction model 17, a presentation unit 18, and an evaluation unit 19, for example. These functions may be implemented by hardware of the computer 10 (see FIG. 2). Specifically, the processor 10a may execute the program 10h to implement each function as the corpus creation unit 11, the input data processing unit 12, the corpus search unit 13, the training data creation unit 14, the training processing unit 15, the time-series prediction model 17, the presentation unit 18, and the evaluation unit 19.

Furthermore, the information processing system 1 includes a corpus 16. The information constituting the corpus 16 may be stored in the storage unit 10d of the computer 10 or may be stored in a storage device connected to the computer 10, and can be appropriately changed and implemented.

The corpus creation unit 11 creates the corpus 16.

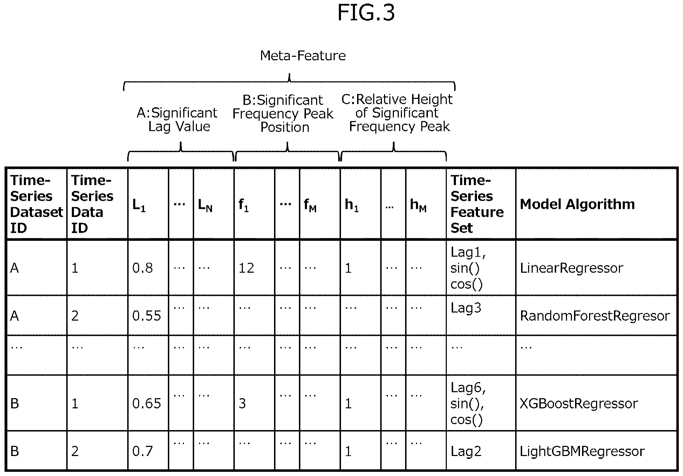

FIG. 3 is a diagram illustrating an example of configuration of the corpus 16 in the information processing system 1 according to the embodiment.

The corpus 16 is information in which both the time-series feature set for achieving the highest prediction accuracy and the model algorithm are associated with the meta-feature of the time-series data for each piece of time-series data included in each dataset in the set of time-series dataset for corpus creation. The corpus 16 may be referred to as a database. Before training the time-series prediction model 17, the corpus creation unit 11 creates the corpus 16 based on a plurality of pieces of time-series data as preprocessing.

In the corpus 16 illustrated in FIG. 3, a significant autocorrelation lag value (see symbol A), a significant frequency peak position in the spectrum (see symbol B), a relative height of a significant frequency peak in the spectrum (see symbol C), an optimal time-series feature set, and an optimal model algorithm, which are calculated after stabilization, are associated with each piece of time-series data of the set of time-series datasets for corpus creation.

The time-series data used to create the corpus 16 has time and an objective variable. Here, the time is a time at which data is acquired, and the time interval is constant. The objective variable is a variable desired to be predicted by the time-series prediction model 17 such as sales, and is a real value. The objective variable desirably does not include a categorical variable (weather or the like) that does not depend on time. Data including a plurality of pieces of time-series data may be referred to as a time-series dataset.

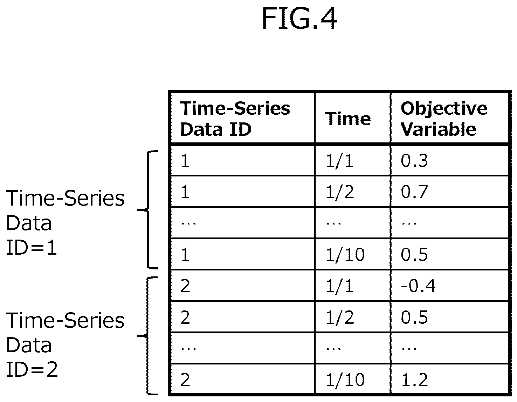

FIG. 4 is a diagram illustrating an example of time-series dataset in the information processing system 1 according to the embodiment.

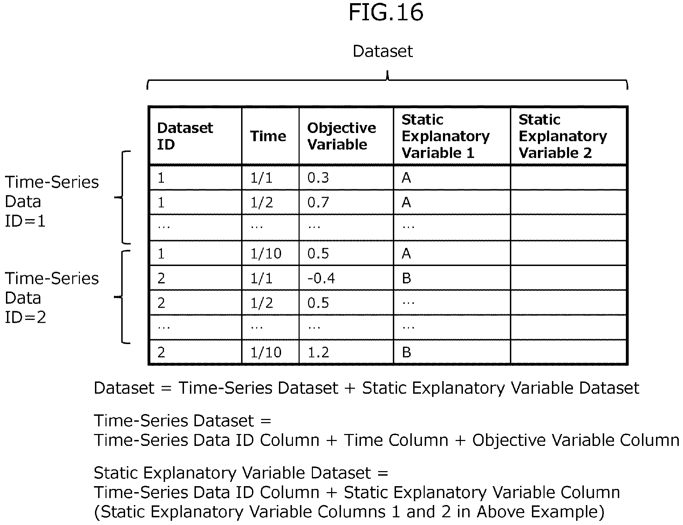

In the time-series dataset illustrated in FIG. 4, the time and the objective variable are associated with the time-series data ID. A case where each piece of time-series data is accompanied by a static explanatory variable will be described later with reference to FIG. 16. In the time-series dataset, particularly, the time and the objective variable may be referred to as a time-series portion. The time-series data ID is an identifier that uniquely identifies the time-series data.

In addition, the time-series dataset illustrated in FIG. 4 includes time-series data of time-series data ID=1 and a plurality of pieces of time-series data of time-series data ID=2, but is not limited thereto. The time-series dataset may include three or more pieces of time-series data. In addition, the number of time-series data included in the time-series dataset is not limited to a specific value.

The corpus creation unit 11 creates the corpus 16 by [Procedure 1] to [Procedure 4] described below based on the set of time-series datasets for corpus creation.

The corpus creation unit 11 repeats [Procedure 1] to [Procedure 4] for each piece of time-series data in each time-series dataset of the set of time-series datasets for corpus creation.

[Procedure 1]

In Procedure 1, the corpus creation unit 11 performs stabilization of time-series data used for training as preprocessing.

In the stabilization, the corpus creation unit 11 first performs trend suppression. The corpus creation unit 11 suppresses a trend by performing appropriate transformation on the time-series data. Various known methods may be used for the transformation. For example, any one of logarithmic transformation, Box-Cox transformation, and Yeo-Johnson transformation may be used.

Next, the corpus creation unit 11 evaluates the stationarity of the time-series data. In the present embodiment, an example in which the corpus creation unit 11 evaluates the stationarity using an ADF (Augmented Dickey-Fuller) test will be described.

The corpus creation unit 11 determines the significance level $\alpha_{ADF}$ and verifies whether the time-series data is stationary. The corpus creation unit 11 may use any value of 1%, 5%, and 10% generally used in statistics as the significance level $\alpha_{ADF}$ (null hypothesis $H_0$: time-series data is nonstationary, alternative hypothesis $H_1$: time series is stationary).

The corpus creation unit 11 determines whether the time-series data is stationary at the significance level $\alpha_{ADF}$. When the ADF statistic calculated by the ADF test falls below the ADF statistic at the significance level $\alpha_{ADF}$, it is assumed that the time-series data is stationary at the significance level $\alpha_{ADF}$.

When the time-series data is not stationary at the significance level $\alpha_{ADF}$. the corpus creation unit 11 calculates a difference time series. The time series is set as $y_t$.

$$[\text{Mathematical Formula 1}]$$

$$\Delta y_t \leftarrow \Pi_i (1 - L_i) y_t$$

The lag operator Li is defined with i as the order of the difference. For example, when $L_1$ acts on $y_t$, $L_1 y_t = y_{t-1}$. $(1-L_1) y_t = y_t - y_{t-1}$ is referred to as a difference time series of order 1. A known algorithm may be used as the optimal difference order. Empirically, many time series considered in business often become stationary when taking a difference of one or two orders. Hereinafter, the time series to which the optimal difference is applied is referred to as a difference time series.

[Procedure 2]

In Procedure 2, the corpus creation unit 11 checks whether a significant correlation remains in the difference time series. The corpus creation unit 11 determines the significance level $\alpha_{LB}$ and performs Ljung-Box test on the difference time series.

The Ljung-Box test defines the largest lag L and tests whether there is a lag exceeding the significance level $\alpha_{LB}$ for lags 1 to L (the null hypothesis $H_0$: there is no significant autocorrelation from the lags 1 to L, and the alternative hypothesis $H_1$: there is a significant autocorrelation in at least one of the lags 1 to L.).

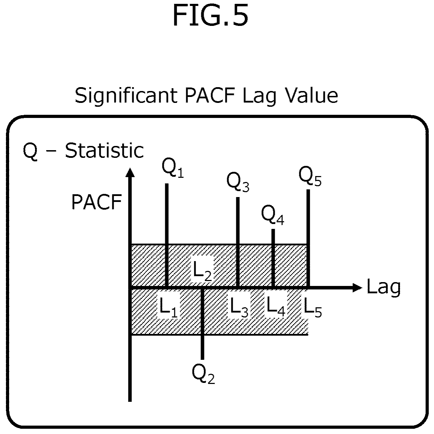

FIG. 5 is a diagram illustrating Ljung-Box test.

In FIG. 5, the shaded region is a statistical confidence interval, and represents a Q statistic (statistic used in Ljung-Box test) determined by the significance level $\alpha_{LB}$. Beyond this confidence interval, there will be a statistically significant difference. $H_0$ is rejected when there is a lag order beyond this confidence interval. When $H_0$ is not rejected, the difference time series is white noise within the Ljung-Box test.

The corpus creation unit 11 determines whether there is a lag exceeding the significance level. When the null hypothesis of the Ljung-Box test is not rejected, that is, when there is a lag exceeding the significance level, the corpus creation unit 11 stores all the lags Li up to the order N and the values Qi of Q statistics.

[Procedure 3]

In Procedure 3, the corpus creation unit 11 extracts the time-series feature (meta-feature) from the difference time series.

In a case where it is found that there is a significant correlation in the difference time series, the corpus creation unit 11 performs modeling through a standard time-series feature. A set of the lags and the Q statistics obtained by the Ljung-Box test is taken as $\{(L_i, Q_i)\}$.

In the present embodiment, the corpus creation unit 11 stores, as meta-features, the result of the Ljung-Box test on the difference time series, a set of significant peaks in the Fourier spectrum of the difference time series, and their relative heights as explanatory variables in the corpus. In addition, a lag feature, a time window feature, and a trigonometric function feature are extracted as time-series features, and these are screened by RFE. A calculation example of these features will be described.

<Lag Feature>

The corpus creation unit 11 creates, as time-series features, lag features for all the elements $L_i$ of a set of lags $\{L_i\}$ (hereinafter, referred to as a significant lag set) exceeding a predetermined significance level $\alpha_{LB}$ among the results of the Ljung-Box test $\{(L_i, Q_i)\}$ ($i = 1, 2, \cdots, N$).

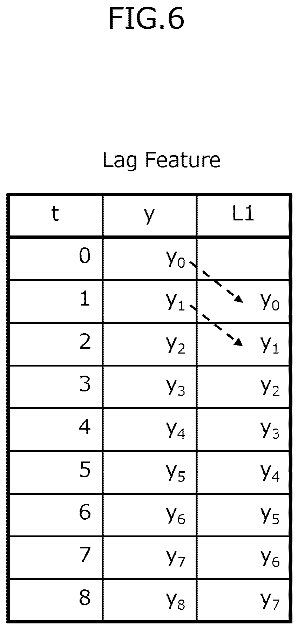

FIG. 6 is a diagram illustrating a lag feature in the information processing system 1 according to the embodiment.

In the example illustrated in FIG. 6, the case of the lag L1 = 1 is illustrated, and the value of y at the t-1 time point is set as the feature (lag feature) at the t time point.

<Time Window Feature>

Further, the corpus creation unit 11 calculates the time window feature as the time-series feature. The corpus creation unit 11 creates a window (window interval) with all possible combinations of each element of the significant lag set $\{L_i\}$. For example, a window created by a combination of the lag $L_1$ and the lag $L_2$ may be referred to as a $[L_1, L_2]$, and a window created by a combination of the lag $L_1$ and the lag $L_3$ may be referred to as a $[L_1, L_3]$.

The corpus creation unit 11 extracts the statistical feature (rolling feature) using the created window. As the statistical feature, for example, any one of a minimum value (min), a maximum value (max), a mean value (mean), and a standard deviation (std) may be used.

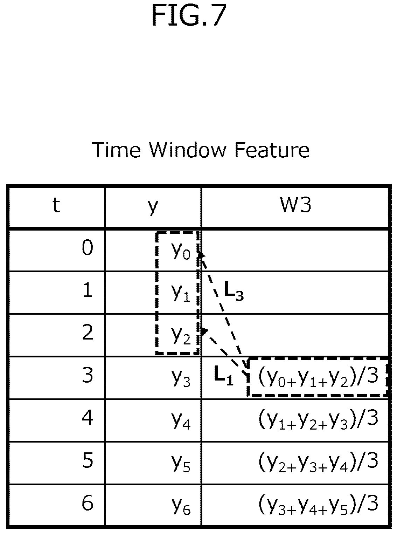

FIG. 7 is a diagram illustrating a time window feature in the information processing system 1 according to the embodiment.

In the example illustrated in FIG. 7, the total values in the past three periods (t-1,t-2,t-3; for example, t = 0 to 2) are targeted, and the average of these total values is set as the time-series feature at the time point t (for example, t = 3).

<Trigonometric Function Feature>

In addition, the corpus creation unit 11 calculates a trigonometric function feature as the time-series feature. The corpus creation unit 11 searches for a significant peak from the spectrum of the difference time series obtained by the Fourier transform. A set of significant peaks is defined as $\{f_i\}$.

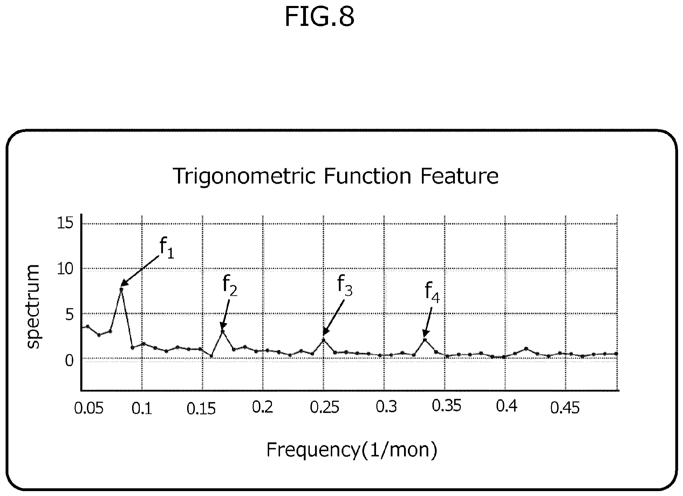

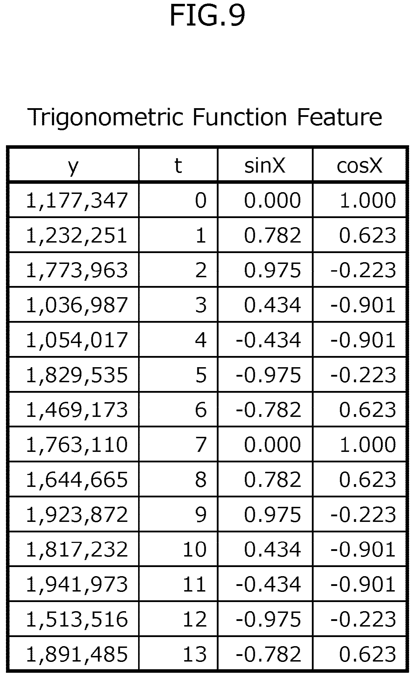

FIG. 8 is a diagram illustrating an example of spectrum, and FIG. 9 is a diagram illustrating an example of trigonometric function feature in the information processing system 1 according to the embodiment.

In FIG. 8, $f_1$ to $f_4$ indicate peak positions (frequencies), respectively. Significance of the peak may be determined using various known techniques.

In order to remove the dependence of the difference time series on the amplitude, it is desirable to normalize each frequency peak at the height of the highest frequency peak. In the example illustrated in FIG. 8, the height of $f_1$ is set to 1, and other peaks are scaled together.

In order to make the trigonometric function feature independent of the time scale of the data interval of the time-series data, it is desirable to use the number of steps of the data interval as a unit of time. The unit of the peak position (frequency) is the reciprocal of the number of steps. That is, the significant period $T_i$ may be obtained based on the following Formula (1).

$$T_i = 1 / f_i \quad \cdots \quad (1)$$

For example, a time series in which a 12-month period exists (data interval of 1 month) and a time series in which a 12-hour period exists (data interval of 1 hour) may both be treated as a time series having a period of the number of steps of 12.

In the trigonometric function feature illustrated in FIG. 9, when the period is represented by p, $\sin(2\pi t/p)$ is sinX, and $\cos(2\pi t/p)$ is cosX. For p, the period $T_i$ calculated by the above formula (1) is used.

According to [Procedure 1] to [Procedure 3] described above, the corpus creation unit 11 configures the meta-feature of the time-series data using the result of the Ljung-Box test and the spectrum, which well represent the time-series property.

[Procedure 4]

In Procedure 4, the corpus creation unit 11 narrows down the time-series feature for each piece of the time-series data, determines the optimal model algorithm, and registers them in the corpus 16.

A plurality of machine learning algorithms (a set of machine learning algorithms) are prepared in advance. The machine learning algorithm may include, for example, a deep learning algorithm in addition to Linear Regressor, Random Forest Regressor, Light GBM Regressor, and the like.

As a set of machine learning algorithms, it may be configured such that it is possible to compensate for each other's weak points. As a result, versatility can be imparted to prediction of a new time series, and many types of time-series data can be predicted with high accuracy. For example, it is conceivable to add linear regression to compensate for a defect of an algorithm of a decision tree system that can be predicted only within a range of data values given at the time of training. The machine learning algorithm may be referred to as a model algorithm.

The corpus creation unit 11 performs feature selection on each of the plurality of prepared model algorithms for each piece of time-series data by using the time-series feature created in the procedure 3. For example, RFE may be used for the feature selection.

In the RFE, the corpus creation unit 11 first trains the time-series prediction model 17 with all the time-series features. Thereafter, the corpus creation unit 11 deletes the time-series feature having the lowest index for measuring the importance of the feature such as feature importance, and re-trains the time-series prediction model 17.

For example, the corpus creation unit 11 repeatedly executes deletion of the time-series features and model retraining until the number of time-series features becomes half. The calculation may be terminated when an evaluation index such as accuracy falls below a preset threshold during the reduction. In the RFE, the number of features is reduced to half by default. In this way, as a result of reducing the time-series feature by the RFE, the remaining time-series feature may be said to be the optimal time-series feature for the time-series dataset. As a result, a set of optimal time-series features (the optimal time-series feature set) is determined for certain time-series data.

Note that, in data analysis, since it is common to create a large number of features as many as possible, it can be said that a considerable reduction has been achieved even if the reduction amount is half.

In addition, the corpus creation unit 11 determines, as an optimal model algorithm, a model algorithm that has achieved the highest accuracy among a plurality of algorithms.

The corpus creation unit 11 registers, in the corpus 16, a combination of the determined optimal model algorithm and the optimal time-series feature set.

Specifically, for one piece of time-series data, the corpus creation unit 11 registers a combination of the determined optimal model algorithm and the optimal time-series feature set in the corpus 16 in association with a result $\{(L_i, Q_i)\}$ (i = 1, 2,..., N) of the Ljung-Box test on the difference time series, a set $\{f_i\}$ of significant peaks of the spectrum, and a relative height $\{h_i\}$ of significant frequency peaks.

The optimal time-series feature is an example of the selected feature selected by performing feature selection (RFE) on a plurality of types of features extracted based on the objective variable and the explanatory variable before the prediction time point.

The optimal model algorithm is an example of the most accurate model algorithm in which the feature selection (RFE) is performed for each of the plurality of model algorithms.

In the corpus 16 illustrated in FIG. 3, for a time-series dataset of time-series dataset ID=1 and time-series data ID=1, a lag feature (Lag1) and a trigonometric function feature (sin(), cos()) are registered as the optimal time-series feature set, and Linear Repressor is registered as the optimal model algorithm.

Note that the total number N of significant lags to be considered and the total number M of significant peaks in the spectrum to be considered are desirably determined in advance.

Here, the meta-feature vector can be expressed by the following column vector. Here, the symbol T represents transposition.

[Mathematical Formula 2]

$$\vec{\xi} = (L_1, \ldots, L_N, f_1, \ldots, f_M, h_1, \ldots, h_M)^T$$

The corpus creation unit 11 normalizes such a meta-feature vector for each time-series data.

[Mathematical Formula 3]

$$|\vec{\xi}| = 1$$

The corpus creation unit 11 also stores the normalized meta-feature vector in the corpus 16 in association with the time-series dataset ID and the time-series data ID.

The input data processing unit 12 creates the meta-feature for the time-series dataset newly input after the corpus creation, using the same technique as the procedures 1 to 3 by the corpus creation unit 11 described above. The time-series dataset newly input after the corpus creation may be referred to as a new time-series dataset. Similarly, each time series included in the new time-series dataset may be referred to as new time-series data.

The input data processing unit 12 extracts the meta-feature of each piece of time-series data in the new time-series data.

The input data processing unit 12 performs, for example, stabilization of each piece of time-series data included in the new time-series dataset as preprocessing.

Then, the input data processing unit 12 extracts the meta-feature from the difference time series of each piece of time-series data. That is, the input data processing unit 12 obtains a set of the lag and the Q statistic $\{(L_i, Q_i)\}(i = 1, 2, ..., N)$ obtained by performing the Ljung-Box test for each piece of time-series data in the new time-series dataset. In addition, the input data processing unit 12 obtains a set $\{f_i\}$ of significant peaks of the spectrum and a ratio of heights thereof $\{h_i\}$.

The input data processing unit 12 creates and standardizes a meta-feature vector in which $\{L_i\}$, $\{f_i\}$, $\{h_i\}$ are arranged for the new time-series data.

The corpus search unit 13 searches the corpus 16 for the time-series data having a high similarity in the meta-feature with the new time-series data created by the input data processing unit 12.

For example, the corpus search unit 13 compares each meta-feature vector of the plurality of pieces of time-series data registered in the corpus 16 with the meta-feature vector of the new time-series data, and searches for a time-series dataset having the closest (most similar) meta-feature vector. As an index for measuring the closeness of the meta-feature vector, for example, cosine similarity or Euclidean distance may be used, or a technique other than these may be used, and various modifications can be made.

The corpus search unit 13 reads the optimal time-series feature (the optimal time-series feature set) associated in the corpus 16 for the time-series data (the time-series data similar to the new time-series data) found from the corpus 16.

The corpus search unit 13 may notify the presentation unit 18 of the optimal time-series feature (the optimal time-series feature set) of the time-series data similar to the searched new time-series data.

The presentation unit 18 creates and presents data to be presented to the user (analyst).

The presentation unit 18 extracts the optimal time-series feature notified from the corpus search unit 13 from the new time-series data.

The presentation unit 18 presents the optimal time-series feature extracted from the new time-series data to the analyst together with information indicating the optimal model algorithm searched from the corpus 16 by the corpus search unit 13.

The training data creation unit 14 creates training data to be used for training the time-series prediction model 17. For example, the training data creation unit 14 creates training data by combining the optimal time-series feature and the static explanatory variable searched by the corpus search unit 13 for each of the plurality of pieces of time-series data included in the new time-series dataset.

For example, the training data may have a structure in which the optimal time-series feature and the static explanatory variable are associated with a time-series portion (time and objective variable) of the time-series data included in the new time-series dataset.

The training processing unit 15 trains the time-series prediction model 17 by applying the optimal model algorithm extracted from the corpus 16 by the corpus search unit 13 using the training data created by the training data creation unit 14. The objective variable in the training data may be used as the correct data.

The training processing unit 15 trains the model by using, for example, a neural network or classical machine learning.

The evaluation unit 19 evaluates the time-series prediction model 17 trained by the training processing unit 15. The evaluation unit 19 inputs the time-series data for verification to the time-series prediction model 17 to perform prediction. The evaluation unit 19 calculates the prediction accuracy of the time-series prediction model 17 based on the prediction result of the time-series prediction model 17 and the correct data.

Here, when extracting the optimal time-series feature used at the time of training the time-series prediction model 17, preprocessing such as logarithm or difference is performed on the original time series in the preprocessing. The time-series prediction model 17 returns a prediction value in a state where the preprocessing has been performed. The evaluation unit 19 performs inverse transform of preprocessing on the prediction value output from the time-series prediction model 17 to obtain a final prediction value. For example, the evaluation unit 19 applies an exponential function when logarithmic transformation is performed. In addition, in a case where the difference is taken, the cumulative sum is taken.

The evaluation unit 19 compares the prediction result for the test data with the correct data to calculate the prediction accuracy and the like, and evaluates the time-series prediction model 17.

(B) Operation

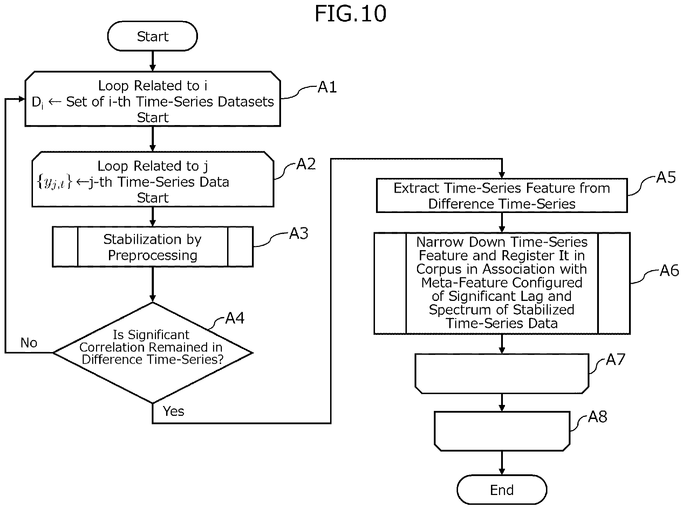

The processing of the corpus creation unit 11 of the information processing system 1 according to the embodiment configured as described above will be described with reference to the flowchart (steps A1 to A8) illustrated in FIG. 10.

In step A1, a loop process (loop related to i) of repeatedly performing the control up to step A8 on all time-series data in the set of time-series dataset for corpus creation is started.

In step A2, a loop process (loop related to j) of repeatedly performing the control up to step A6 on all $\{y_{j,t}\}$ is started.

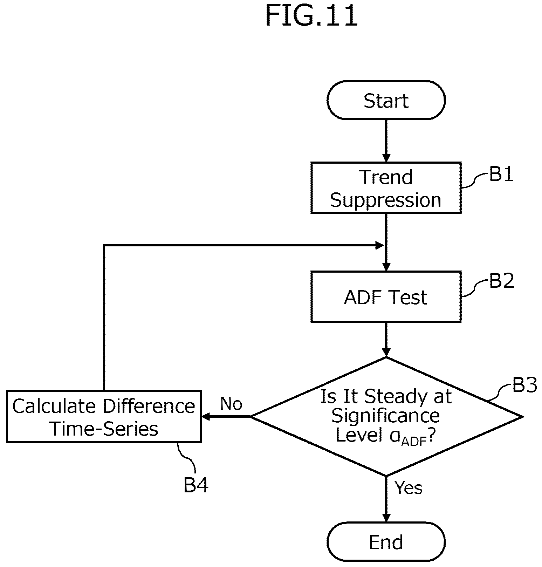

In step A3, the corpus creation unit 11 performs stabilization by preprocessing. The processing corresponds to Procedure 1 described above. Details of the processing in step A3 will be described later with reference to FIG. 11.

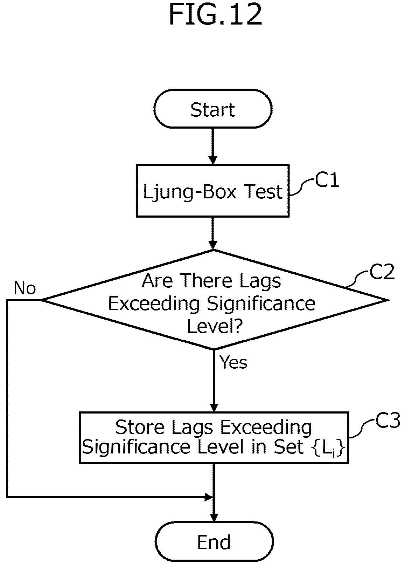

In step A4, the corpus creation unit 11 checks whether a significant correlation remains in the difference time series. The processing corresponds to Procedure 2 described above. Details of the processing in step A4 will be described later with reference to FIG. 12. As a result of the checking in step A4, in a case where a significant correlation remains in the difference time series (see Yes route in step A4), the process proceeds to step A5. In addition, in a case where no significant correlation remains in the difference time series (see No route of step A4), the process returns to step A1.

In step A5, the corpus creation unit 11 extracts the meta-feature and the time-series feature from the difference time series. The processing corresponds to Procedure 3 described above. The corpus creation unit 11 extracts, for example, a lag feature, a time window feature, and a trigonometric function feature as the time-series feature.

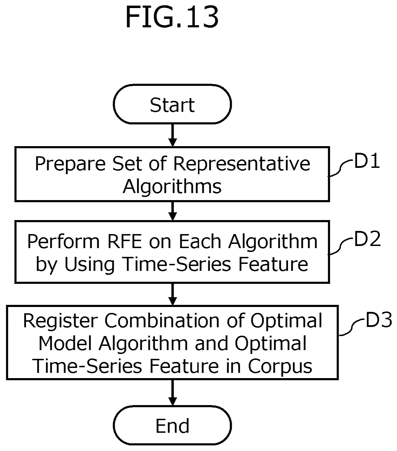

In step A6, the corpus creation unit 11 narrows down the time-series feature, determines the optimal model algorithm, and registers them in the corpus 16 for each piece of the time-series data. The processing corresponds to Procedure 4 described above. Details of the processing in step A6 will be described later with reference to FIG. 13.

In step A7, the loop end processing corresponding to step A2 is performed. Here, when the processing for all $\{y_{j,t}\}$ is completed, the process proceeds to step A8.

In step A8, the loop end processing corresponding to step A1 is performed. Here, when the processing for all the time-series datasets in the set of time-series datasets for corpus creation is completed, this flow ends.

Next, details of the processing of step A3 of the flowchart illustrated in FIG. 10 will be described according to the flowchart (steps B1 to B4) illustrated in FIG. 11. The processing corresponds to Procedure 1 described above.

In step B1, the corpus creation unit 11 performs trend suppression. The corpus creation unit 11 suppresses a trend by performing appropriate transformation on the time-series data.

In step B2, the corpus creation unit 11 evaluates the stationarity of the time-series data using the ADF test.

In step B3, the corpus creation unit 11 determines whether the time-series data to be processed is stationary at the significance level $\alpha_{ADF}$. As a result of the checking process, when the time-series data is not stationary at the significance level $\alpha_{ADF}$ (see No route in step B3), the process proceeds to step B4.

In step B4, the corpus creation unit 11 calculates the difference time series. Thereafter, the process returns to step B2.

In addition, as the checking result of step B3, when the time-series dataset is steady at the significance level $\alpha_{ADF}$ (see Yes route of step B3), the flow is ended, and the process proceeds to step A3 of the flowchart illustrated in FIG. 10.

Next, details of the processing of step A4 of the flowchart illustrated in FIG. 10 will be described according to the flowchart (steps C1 to C3) illustrated in FIG. 12. The processing corresponds to Procedure 2 described above.

In step C1, the corpus creation unit 11 determines the significance level $\alpha_{LB}$ and performs Ljung-Box test on the difference time series. The significance level $\alpha_{LB}$ may be chosen among 1%, 5%, 10%, which are often used in statistics. The result of the Ljung-Box test $\{(L_i, Q_i)\}$ ($i = 1, 2, \cdots, N$) is stored with $L_i$ as the lag of the order i and $Q_i$ as the Q statistic for $L_i$.

In step C2, the corpus creation unit 11 determines whether lags exceeding the significance level exist (remain).

As a result of the determination, when there are lags exceeding the significance level (see Yes route of step C2), the process proceeds to step C3.

In step C3, the corpus creation unit 11 stores a set of lags $\{L_i\}$ exceeding the significance level $\alpha_{LB}$ from the result of the Ljung-Box test $\{ (L_i, Q_i)\}(i = 1, 2, ..., N)$, and uses the set of lags $\{L_i\}$ for time-series feature extraction in step A4. Thereafter, the flow is ended, and the process proceeds to step A4 of the flowchart illustrated in FIG. 10.

In addition, as a result of the determination in step C2, in a case where there is no lag exceeding the significance level (see No route in step C2), the flow is ended, and the processing proceeds to step A6 of the flowchart illustrated in FIG. 10. In this case, it is indicated that the time-series data to be processed becomes white noise within the range of the Ljung-Box test by the stabilization processing (the trend suppression processing and an appropriate order difference application). Such time-series data is not registered in the corpus. When the new time-series data subjected to the stabilization processing after the corpus creation is determined to be white noise within the range of the Ljung-Box test, the histogram of the time-series data after the stabilization processing (after the stabilization processing is applied) is fitted by a normal distribution function. In a case where the prediction is performed, a large number of samples are averaged from the normal distribution, the inverse transform of the stabilization processing is applied to these samples, and the results are returned as a prediction result.

Next, details of the processing of step A6 of the flowchart illustrated in FIG. 10 will be described according to the flowchart (steps D1 to D3) illustrated in FIG. 13. The processing corresponds to Procedure 4 described above.

In step D1, a plurality of machine learning algorithms (a set of machine learning algorithms) are prepared in advance. The machine learning algorithm desirably includes a representative algorithm in the time-series prediction model.

In step D2, the corpus creation unit 11 performs RFE on each of the plurality of prepared algorithms for each piece of time-series data by using the time-series feature created in the procedure 3. By this RFE, a set of optimal time-series features (the optimal time-series feature set) is determined for each piece of time-series data in the time-series dataset $D_i$. In addition, the corpus creation unit 11 determines, as an optimal model algorithm, an algorithm that has achieved the highest accuracy among a plurality of algorithms.

In step D3, the corpus creation unit 11 registers, in the corpus 16, a combination of the optimal model algorithm and the optimal time-series feature set together with the meta-feature. Thereafter, the flow is ended, and the processing proceeds to step A6 of the flowchart illustrated in FIG. 10.

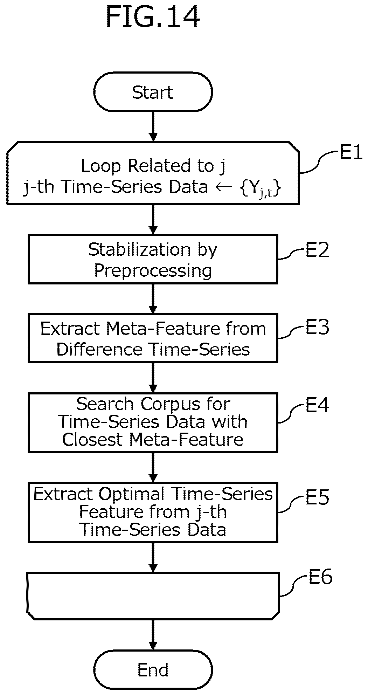

Next, processing on the new time-series dataset in the information processing system 1 according to the embodiment will be described according to the flowchart (steps E1 to E6) illustrated in FIG. 14. In the present processing, the information processing system 1 selects a time-series feature for obtaining a highly accurate result and presents the selected time-series feature to the analyst when performing time-series prediction on the new time-series dataset.

In step E1, a loop process (loop related to j) of repeatedly performing the control up to step E6 is started. In this step E1, a new time-series dataset is input. In the following steps, processing is performed on each piece of time-series data included in the new time-series dataset.

In step E2, the input data processing unit 12 performs stabilization of each piece of time-series data included in the new time-series dataset as preprocessing.

In step E3, the input data processing unit 12 extracts the meta-feature from each difference time series.

In step E4, the corpus search unit 13 searches the corpus 16 for the time-series data having high similarity of the meta-feature for each piece of the time-series data in the new time-series data created by the input data processing unit 12.

In step E5, the presentation unit 18 extracts the optimal time-series feature notified from the corpus search unit 13 from the new time-series data after the stabilization processing, and presents the same to the analyst together with the optimal model algorithm.

In step E6, the loop end processing corresponding to step E1 is performed. Here, when the processing for all $\{y_{j,t}\}$ is completed, the processing is ended.

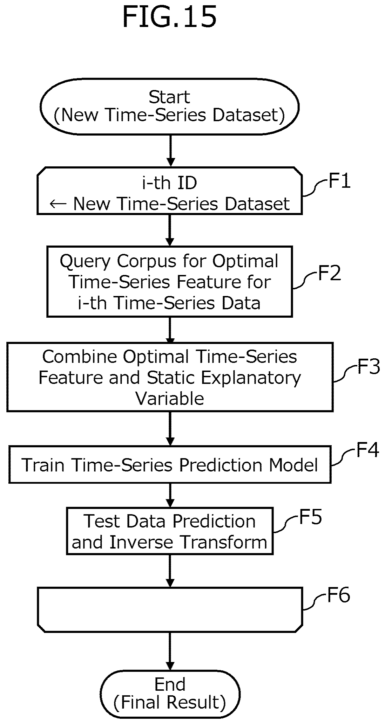

Next, in the information processing system 1 according to the embodiment, a case where a static explanatory variable exists will be described. In actual analysis, not only time-series data but also static explanatory variables are often present in a dataset to be analyzed. In such a case, a time-series dataset portion is separated from a dataset to be analyzed, and an optimal time-series feature for each piece of time-series data included therein is queried and extracted from the corpus, and then the previously separated static explanatory variable portion is combined. Hereinafter, a detailed description will be given according to the flowchart (steps F1 to F6) illustrated in FIG. 15.

In the flowchart illustrated in FIG. 15, an example in which the analyst has a dataset (new dataset) with correct data and operates the dataset by dividing the dataset into a set portion, a training dataset, and a verification dataset is illustrated. A static explanatory variable is given to this dataset in addition to a portion corresponding to the time-series dataset, and the dataset has a configuration illustrated in FIG. 16. In the training phase, the training dataset is used to train the time-series prediction model 17. The portion corresponding to each time series ID is extracted from the training data, and the model is individually trained for each time series ID. Similarly, in the verification phase in which the prediction is performed, the time-series prediction model 17 is evaluated by comparing the prediction result performed for each time series ID with the correct data.

In the flowchart illustrated in FIG. 15, steps F1 to F4 correspond to the training phase, and step F5 corresponds to the verification phase.

In step F1, a loop process of repeatedly performing the control up to step F6 on all the time-series data included in the new dataset is started. The input data processing unit 12 extracts time-series data of the time-series data ID=i from a new dataset (a set of time-series data) and performs the stabilization processing.

In step F2, the input data processing unit 12 extracts the meta-feature from the time-series data of the i-th ID to which the stabilization processing has been applied from the corpus 16, and normalizes the meta-feature.

The corpus search unit 13 searches the corpus 16 for the time-series data having high similarity of the meta-feature with the time-series data with ID=i which is created by the input data processing unit 12 and to which the stabilization processing has been applied, and acquires the optimal time-series feature (optimal time-series feature set) and the optimal model algorithm in the corpus 16 associated with the time-series data having high similarity.

In step F3, the training data creation unit 14 creates training data to be used for training the time-series prediction model 17. For example, the training data creation unit 14 extracts the optimal time-series feature with respect to the stabilized time-series data and combines the same with the static explanatory variable to create the training data. In step F4, the training processing unit 15 trains the time-series prediction model 17 using the training data created in step F3.

In step F5, the evaluation unit 19 evaluates the time-series prediction model 17 trained by the training processing unit 15. The evaluation unit 19 inputs the time-series dataset for verification to the time-series prediction model 17 and causes prediction to be performed for each time-series data ID. The evaluation unit 19 calculates the prediction accuracy of the time-series prediction model 17 based on the prediction result of the time-series prediction model 17 and the correct data.

In addition, the evaluation unit 19 performs an inverse transform of the stabilization processing on the prediction value output from the time-series prediction model 17 as needed to obtain a final prediction value. Thereafter, the processing ends. Note that, by this flow, the prediction result of the time-series prediction model 17 and the prediction accuracy thereof are obtained.

In step F6, the loop end processing corresponding to step F1 is performed. Here, when the processing for all the time-series data is completed, the processing is ended.

(C) Effects

As described above, in the information processing system 1 as an example of the embodiment, the corpus creation unit 11 creates the corpus 16 based on a plurality of pieces of time-series data as preprocessing before training the time-series prediction model 17.

In the corpus 16, the optimal time-series feature set and the optimal model algorithm are associated with the meta-feature including the characteristic of the time-series for each piece of time-series data included in the set of time-series dataset for corpus creation.

Then, the corpus search unit 13 searches the corpus 16 for the time-series data having a high similarity of the meta-feature with the new time-series data, and acquires the optimal time-series feature set and the optimal model algorithm associated with the time-series data having a high similarity.

As a result, it is possible to present the optimal time-series feature for the new time-series data to the analyst in a short time. In addition, the time-series feature engineering technology is standardized, and the number of man-hours that the analyst spends in the time-series feature search can be reduced.

In addition, when the time-series prediction model 17 is trained using the new time-series dataset, the optimal time-series feature set and the optimal model algorithm corresponding to the time-series data having a high similarity of the meta-feature with each piece of time-series data included in the new time-series dataset are acquired and used, so that it is possible to reduce the number of man-hours for the analyst to search the time-series feature. As a result, it is possible to shorten the time for training the time-series prediction model 17.

By measuring the similarity between the time series by the meta-feature configured by the result of the Ljung-Box test and the spectrum, it is possible to efficiently search the corpus 16 for the time-series dataset similar to the new time-series dataset.

(D) Others

Each configuration and each process of the present embodiment can be selected as needed, or may be appropriately combined.

In addition, the disclosed technology is not limited to the above-described embodiments, and various modifications can be made without departing from the gist of the present embodiment.

For example, in the embodiment described above, the RFE is performed as the feature selection method, but the method is not limited thereto, and the feature selection may be performed using another method.

In addition, in the above-described embodiment, the example in which the corpus creation unit 11 configures the meta-feature from the result of the Ljung-Box test and the spectrum, and extracts the lag feature, the time window feature, and the trigonometric function feature as the time-series feature is illustrated, but the embodiment is not limited thereto. Another feature may be extracted as the time-series feature. In addition, only a part of the lag feature, the time window feature, and the trigonometric function feature may be used, and various modifications can be made.

Furthermore, according to the disclosure described above, the present embodiment can be carried out and manufactured by those skilled in the art.

(E) Appendix

(Appendix 1) A machine learning program for causing a computer to execute processing including:

searching a corpus for time-series data having meta-feature determined close to meta-feature based on a result of a Ljung-Box test on stabilized time-series data and a spectrum of the stabilized time-series data; and training a model with a time-series feature and a model algorithm that are optimal for time series associated with the time-series data.

(Appendix 2) The machine learning program according to appendix 1, the processing further including: selecting a lag at which a value of a Q statistic exceeds a statistical confidence interval.
(Appendix 3) The machine learning program according to appendix 1, the processing further including:

registering a selected feature selected by performing feature selection on a plurality of types of features extracted based on an explanatory variable and an objective variable before a prediction execution time point, as a corpus in association with a data group, and
stabilizing newly input time-series data, extracting the selected feature corresponding to a time-series data having a meta-feature vector most similar to a meta-feature vector extracted from the newly input time-series data from the corpus and determining the extracted selected feature as feature.

(Appendix 4) The machine learning program according to appendix 3, the processing further including:

performing the feature selection on each of a plurality of model algorithms, and registering a model algorithm having the highest accuracy in the corpus in association with a meta-feature of the time-series data after application of the stabilization processing; and
stabilizing newly input time-series data, and extracting, from the corpus, the model algorithm corresponding to time-series data having a meta-feature vector most similar to a meta-feature vector extracted from the newly input time-series data, wherein
the processing of training the model includes:

a process of performing machine learning of a model using the model algorithm extracted from the corpus.
(Appendix 5) The machine learning program according to any one of appendixes 1 to 4, the processing further including:
stabilizing the time-series data is included, and determining the feature based on the stabilized time-series data is included.

(Appendix 6) A machine learning method, wherein a computer executes processing including:

searching a corpus for time-series data having close meta-features determined based on a result of a Ljung-Box test on the stabilized time-series data and a spectrum; and
training a model with an optimal time-series feature and model algorithm for time series associated with the time-series data.

(Appendix 7) The machine learning method according to appendix 6, wherein the processing further includes selecting a lag at which a value of a Q statistic exceeds a statistical confidence interval.
(Appendix 8) The machine learning method according to appendix 6, wherein

the processing further includes

registering a selected feature selected by performing feature selection on a plurality of types of features extracted based on an explanatory variable and an objective variable before a prediction time point, as a corpus in association with a meta-feature of the time-series data; and

stabilizing newly input time-series data, extracting the selected feature corresponding to a time-series data having a meta-feature vector most similar to a meta-feature vector extracted from the newly input time-series data from the corpus and determining the extracted selected feature as a feature.

(Appendix 9) The machine learning method according to appendix 8, wherein

the processing further includes

performing the feature selection on each of a plurality of model algorithms, and registering a model algorithm having the highest accuracy in the corpus in association with a meta-feature of the time-series data for which the stabilization processing has been performed; and

stabilizing newly input time-series data, and extracting, from the corpus, the model algorithm corresponding to a time-series data having a meta-feature vector most similar to a meta-feature vector extracted from the newly input time-series data, and

the processing of training the model includes:

a process of performing machine learning of a model using the model algorithm extracted from the corpus.
(Appendix 10) The machine learning method according to any one of appendixes 6 to 9, wherein
the processing further includes
stabilizing the time-series data is included, and determining the feature based on the stabilized time-series data is included.

(Appendix 11) An inference program for causing a computer to execute processing including:

predicting, using a model, an objective variable at and after the prediction execution time point from an explanatory variable and an objective variable before the prediction execution time point, the model trained with a time-series feature and model algorithm that are optimal for time-series data being searched in a corpus and having meta-feature determined close to meta-feature based on a result of a Ljung-Box test on stabilized time-series data and a spectrum of the stabilized time-series data.

(Appendix 12) The inference program according to appendix 11, wherein

determination of the meta-feature based on the result of a Ljung-Box test on stabilized time-series data comprising selecting a lag at which a value of a Q statistic exceeds a statistical confidence interval in the results of Ljung-Box test on the stabilized time series.

(Appendix 13) The inference program according to appendix 11, wherein

the processing of training the model includes:

a process in which selected features, selected by performing feature selection on a plurality of types of features extracted based on explanatory variables and objective variables prior to the prediction execution time point, are registered as a corpus in association with a data group; and

a process in which, from the corpus, the selected features corresponding to time-series data having a meta-feature vector most similar to a meta-feature vector extracted from newly input time-series data are extracted and determined as features.

(Appendix 14) The inference program according to appendix 13, wherein

the feature selection is performed on each of a plurality of model algorithms, and a model algorithm having the highest accuracy is registered in the corpus in association with the time-series data,

the model algorithm corresponding to the time-series data having a meta-feature vector most similar to a meta-feature vector extracted from newly input time-series data is extracted from the corpus, and

the processing of training the model includes:

a process of performing machine learning of a model using the model algorithm extracted from the corpus.
(Appendix 15) The inference program according to any one of appendixes 11 to 14, wherein
the processing of training the model includes:
a process of stabilizing the time-series data is included, and a process of determining the feature based on the stabilized time-series data is included.

[Description Reference Signs]

1 Information processing system
10 Computer
10a Processor (Controller)
10b Graphic processing device
10c Memory
10d Storage unit
10e IF unit
10f IO unit
10g Reader
10h Program
10i Recording medium
10j Bus
11 Corpus creation unit
12 Input data processing unit
13 Corpus search unit
14 Training data creation unit
15 Training processing unit
16 Corpus
17 Time-series prediction model
18 Presentation unit
19 Evaluation unit

**Claims**

1. A machine learning program for causing a computer to execute processing comprising:

   determining a window interval having a peak and a feature related to the window interval based on a spectrum related to partial autocorrelation for each of the plurality of window intervals indicating a variation of an index of time-series data; and
   performing machine learning of a model (17) that predicts the variation of the index after a first time point from the variation of the index before the first time point using the determined feature.

2. The machine learning program according to claim 1, wherein
   the processing of determining the feature includes:
   a process of selecting a feature having a peak in which a value of a partial autocorrelation function exceeds a statistical confidence interval.

3. The machine learning program according to claim 1, the processing further comprising:

   registering a selected feature selected by performing feature selection on a plurality of types of features extracted based on the variation of the index before the first time point, as a corpus (16) in association with a data group, wherein
   the processing of determining the feature includes:
   a process of extracting the selected feature corresponding to a data group having a feature vector most similar to a feature vector extracted from newly input time-series data from the corpus (16) and determining the extracted selected feature as the feature.

4. The machine learning program according to claim 3, the processing further comprising:

   performing the feature selection on each of a plurality of model algorithms, and registering a model algorithm having the highest accuracy in the corpus (16) in association with the data group; and
   extracting, from the corpus (16), the model algorithm corresponding to a data group having a feature vector most similar to a feature vector extracted from newly input time-series data, wherein

the processing of performing machine learning includes:
a process of performing machine learning of a model (17) using the model algorithm extracted from the corpus (16).

5. The machine learning program according to any one of claims 1 to 4, wherein
the processing of determining the feature includes:
a process of stabilizing the time-series data, and a process of determining the feature based on the stabilized time-series data.

6. A machine learning method, wherein a computer executes processing of:

determining a window interval having a peak and a feature related to the window interval based on a spectrum related to partial autocorrelation for each of a plurality of window intervals indicating a variation of an index of time-series data; and
performing machine learning of a model (17) that predicts the variation of the index after a first time point from the variation of the index before the first time point using the determined feature.

7. The machine learning method according to claim 6, wherein
the processing of determining the feature includes:
a process of selecting a feature having a peak in which a value of a partial autocorrelation function exceeds a statistical confidence interval.

8. The machine learning method according to claim 6, the processing further comprising:

registering a selected feature selected by performing feature selection on a plurality of types of features extracted based on the variation of the index before the first time point, as a corpus (16) in association with a data group, and
the processing of determining the feature includes:
a process of extracting the selected feature corresponding to a data group having a feature vector most similar to a feature vector extracted from newly input time-series data from the corpus (16) and determining the extracted selected feature as the feature.

9. The machine learning method according to claim 8, the processing further comprising:

performing the feature selection on each of a plurality of model algorithms, and registering a model algorithm having the highest accuracy in the corpus (16) in association with the data group; and
extracting, from the corpus (16), the model algorithm corresponding to a data group having a feature vector most similar to a feature vector extracted from newly input time-series data, and
the processing of performing machine learning includes:
a process of performing machine learning of a model (17) using the model algorithm extracted from the corpus (16).

10. The machine learning method according to any one of claims 6 to 9, wherein
the processing of determining the feature includes:
a process of stabilizing the time-series data, and a process of determining the feature based on the stabilized time-series data.

11. An inference program for causing a computer to execute processing comprising:
predicting, using a model (17) generated by machine learning, a variation of an index after a first time point from a variation of the index at and before the first time point, the machine learning using a feature related to a window interval having a peak, the feature and the window interval being based on a spectrum related to partial autocorrelation for each of the plurality of window intervals each indicating a variation of an index of time-series data.

12. The inference program according to claim 11, wherein
the feature is selected from one or more features each having a peak in which a value of a partial autocorrelation function exceeds a statistical confidence interval.

13. The inference program according to claim 11, wherein
the processing further comprises:

registering, as a corpus (16), a selected feature selected by performing feature selection on a plurality of types of features extracted based on the variation of the index before the first time point in association with a data group, and

the feature is the selected feature corresponding to a data group having a feature vector most similar to a feature vector extracted from newly input time-series data, the selected feature being extracted from the corpus (16).

14. The inference program according to claim 13, wherein

the feature selection is performed on each of a plurality of model algorithms, and a model algorithm having the highest accuracy among the plurality of model algorithms is registered in the corpus (16) in association with the data group,

the model algorithm corresponding to a data group having a feature vector most similar to a feature vector extracted from newly input time-series data is extracted from the corpus (16), and

the processing of performing machine learning includes:

a process of performing machine learning of a model (17) using the model algorithm extracted from the corpus (16).

15. The inference program according to any one of claims 11 to 14, wherein

the feature is based on the time-series data being subjected to stabilization.

# FIG.1

# FIG.2

# FIG.3

Meta-Feature

| Time-Series Dataset ID | Time-Series Data ID | A:Significant Lag Value | | | B:Significant Frequency Peak Position | | | C:Relative Height of Significant Frequency Peak | | | Time-Series Feature Set | Model Algorithm |
|---|---|---|---|---|---|---|---|---|---|---|---|---|
| | | $L_1$ | ... | $L_N$ | $f_1$ | ... | $f_M$ | $h_1$ | ... | $h_M$ | | |
| A | 1 | 0.8 | ... | ... | 12 | ... | ... | 1 | ... | ... | Lag1, sin() cos() | LinearRegressor |
| A | 2 | 0.55 | ... | ... | ... | ... | ... | ... | ... | ... | Lag3 | RandomForestRegresor |
| ... | ... | ... | ... | ... | ... | ... | ... | ... | ... | ... | ... | ... |
| B | 1 | 0.65 | ... | ... | 3 | ... | ... | 1 | ... | ... | Lag6, sin(), cos() | XGBoostRegressor |
| B | 2 | 0.7 | ... | ... | ... | ... | ... | 1 | ... | ... | Lag2 | LightGBMRegressor |

# FIG.4

| Time-Series Data ID | Time | Objective Variable |
|---|---|---|
| 1 | 1/1 | 0.3 |
| 1 | 1/2 | 0.7 |
| ... | ... | ... |
| 1 | 1/10 | 0.5 |
| 2 | 1/1 | -0.4 |
| 2 | 1/2 | 0.5 |
| ... | ... | ... |
| 2 | 1/10 | 1.2 |

Time-Series Data ID=1

Time-Series Data ID=2

# FIG.5

Significant PACF Lag Value

# FIG.6

Lag Feature

| t | y | L1 |
|---|---|----|
| 0 | $y_0$ | |
| 1 | $y_1$ | $y_0$ |
| 2 | $y_2$ | $y_1$ |
| 3 | $y_3$ | $y_2$ |
| 4 | $y_4$ | $y_3$ |
| 5 | $y_5$ | $y_4$ |
| 6 | $y_6$ | $y_5$ |
| 7 | $y_7$ | $y_6$ |
| 8 | $y_8$ | $y_7$ |

# FIG.7

Time Window Feature

| t | y | W3 |
|---|---|---|
| 0 | $y_0$ | |
| 1 | $y_1$ | $L_3$ |
| 2 | $y_2$ | |
| 3 | $y_3$ | $L_1$ $(y_0+y_1+y_2)/3$ |
| 4 | $y_4$ | $(y_1+y_2+y_3)/3$ |
| 5 | $y_5$ | $(y_2+y_3+y_4)/3$ |
| 6 | $y_6$ | $(y_3+y_4+y_5)/3$ |

FIG.8

Trigonometric Function Feature

# FIG.9

## Trigonometric Function Feature

| y | t | sinX | cosX |
|---|---|---|---|
| 1,177,347 | 0 | 0.000 | 1.000 |
| 1,232,251 | 1 | 0.782 | 0.623 |
| 1,773,963 | 2 | 0.975 | -0.223 |
| 1,036,987 | 3 | 0.434 | -0.901 |
| 1,054,017 | 4 | -0.434 | -0.901 |
| 1,829,535 | 5 | -0.975 | -0.223 |
| 1,469,173 | 6 | -0.782 | 0.623 |
| 1,763,110 | 7 | 0.000 | 1.000 |
| 1,644,665 | 8 | 0.782 | 0.623 |
| 1,923,872 | 9 | 0.975 | -0.223 |
| 1,817,232 | 10 | 0.434 | -0.901 |
| 1,941,973 | 11 | -0.434 | -0.901 |
| 1,513,516 | 12 | -0.975 | -0.223 |
| 1,891,485 | 13 | -0.782 | 0.623 |

# FIG.10

```
            Start

      Loop Related to i                    ─A1
Dᵢ ← Set of i-th Time-Series Datasets
            Start

      Loop Related to j                    ─A2
  {y_{j,t}} ←j-th Time-Series Data
            Start

      Stabilization by                     ─A3
      Preprocessing

         Is Significant          ─A4
No    Correlation Remained in
      Difference Time-Series?

              Yes
```

Extract Time-Series Feature from    ─A5
Difference Time-Series

Narrow Down Time-Series
Feature and Register It in
Corpus in Association with
Meta-Feature Configured          ─A6
of Significant Lag and
Spectrum of Stabilized
Time-Series Data

─A7

─A8

End

# FIG.11

```
                    ┌──────────┐
                    │  Start   │
                    └────┬─────┘
                         │
                         ▼
                 ┌───────────────┐
                 │     Trend     │── B1
                 │  Suppression  │
                 └───────┬───────┘
    ┌────────────────────┤
    │                    ▼
    │            ┌───────────────┐
    │            │   ADF Test    │── B2
    │            └───────┬───────┘
    │                    │
    │                    ▼
┌──────────────┐  No  ╱─────────────╲── B3
│  Calculate   │◄────╱  Is It Steady  ╲
│  Difference  │     ╲  at Significance╱
│ Time-Series  │      ╲ Level α_ADF?  ╱
└──────┬───────┘       ╲─────┬───────╱
       │ B4                  │ Yes
                             ▼
                     ┌──────────┐
                     │   End    │
                     └──────────┘
```

# FIG.12

```
        ┌─────────┐
        │  Start  │
        └─────────┘
             │
             ▼
      ┌──────────────────┐
      │ Ljung-Box Test   │─⌒ C1
      └──────────────────┘
             │
             ▼
        ╱─────────────╲
  No   ╱ Are There Lags ╲  ⌒ C2
 ◄────┤ Exceeding Significance │
       ╲    Level?    ╱
        ╲─────────────╱
             │ Yes
             ▼
   ┌────────────────────────────┐
   │  Store Lags Exceeding      │─⌒ C3
   │ Significance Level in Set {L_i} │
   └────────────────────────────┘
             │
             ▼
        ┌─────────┐
        │   End   │
        └─────────┘
```

# FIG.13

Start

Prepare Set of Representative Algorithms ⟍D1

Perform RFE on Each Algorithm by Using Time-Series Feature ⟍D2

Register Combination of Optimal Model Algorithm and Optimal Time-Series Feature in Corpus ⟍D3

End

# FIG.14

```
                    ┌─────────────┐
                    │    Start    │
                    └──────┬──────┘
                           │
         ┌─────────────────▼─────────────────┐
         │         Loop Related to j          │── E1
         │  j-th Time-Series Data ← {Y_{j,t}} │
         └─────────────────┬─────────────────┘
                           │
         ┌─────────────────▼─────────────────┐
         │         Stabilization by          │── E2
         │          Preprocessing            │
         └─────────────────┬─────────────────┘
                           │
         ┌─────────────────▼─────────────────┐
         │     Extract Meta-Feature from     │── E3
         │       Difference Time-Series      │
         └─────────────────┬─────────────────┘
                           │
         ┌─────────────────▼─────────────────┐
         │          Search Corpus for        │── E4
         │        Time-Series Data with       │
         │          Closest Meta-Feature      │
         └─────────────────┬─────────────────┘
                           │
         ┌─────────────────▼─────────────────┐
         │    Extract Optimal Time-Series    │── E5
         │          Feature from j-th        │
         │           Time-Series Data        │
         └─────────────────┬─────────────────┘
                           │
         ┌─────────────────▼─────────────────┐
         │                                   │── E6
         │                                   │
         └─────────────────┬─────────────────┘
                           │
                    ┌──────▼──────┐
                    │     End     │
                    └─────────────┘
```

# FIG.15

Start
(New Time-Series Dataset)

i-th ID
← New Time-Series Dataset — F1

Query Corpus for Optimal
Time-Series Feature for
i-th Time-Series Data — F2

Combine Optimal Time-Series
Feature and Static Explanatory
Variable — F3

Train Time-Series Prediction Model — F4

Test Data Prediction
and Inverse Transform — F5

— F6

End
(Final Result)

# FIG.16

Dataset

| Dataset ID | Time | Objective Variable | Static Explanatory Variable 1 | Static Explanatory Variable 2 |
|---|---|---|---|---|
| 1 | 1/1 | 0.3 | A | |
| 1 | 1/2 | 0.7 | A | |
| ... | ... | ... | ... | |
| 1 | 1/10 | 0.5 | A | |
| 2 | 1/1 | -0.4 | B | |
| 2 | 1/2 | 0.5 | ... | |
| ... | ... | ... | ... | |
| 2 | 1/10 | 1.2 | B | |

Time-Series Data ID=1

Time-Series Data ID=2

Dataset = Time-Series Dataset + Static Explanatory Variable Dataset

Time-Series Dataset =
Time-Series Data ID Column + Time Column + Objective Variable Column

Static Explanatory Variable Dataset =
Time-Series Data ID Column + Static Explanatory Variable Column
(Static Explanatory Variable Columns 1 and 2 in Above Example)

# EUROPEAN SEARCH REPORT

**Application Number**

EP 25 21 2259

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FENG CONG ET AL: "A data-driven multi-model methodology with deep feature selection for short-term wind forecasting", APPLIED ENERGY, ELSEVIER SCIENCE PUBLISHERS, GB, vol. 190, 23 January 2017 (2017-01-23), pages 1245-1257, XP029919975, ISSN: 0306-2619, DOI: 10.1016/J.APENERGY.2017.01.043 * sections 2.1.3, 2.1.4, 2.2, 3.1; figure 6 * | 1-15 | INV. G06N20/20 G06F17/18 G06F18/27 |
| X | RANA MASHUD ET AL: "Feature Selection for Neural Network-Based Interval Forecasting of Electricity Demand Data", 10 September 2013 (2013-09-10), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 389 - 396, XP047040830, ISBN: 978-3-540-74549-5 * sections 1, 5.3 * | 1-15 | **TECHNICAL FIELDS SEARCHED (IPC)**<br><br>G06N<br>G06F |
| A | KAREVAN ZAHRA ET AL: "Clustering-based feature selection for black-box weather temperature prediction", 2016 INTERNATIONAL JOINT CONFERENCE ON NEURAL NETWORKS (IJCNN), IEEE, 24 July 2016 (2016-07-24), pages 2722-2729, XP032992507, DOI: 10.1109/IJCNN.2016.7727541 [retrieved on 2016-10-31] * page 2724 - page 2726 * | 3,4,8,9, 13,14 | |

The present search report has been drawn up for all claims

| Place of search | Date of completion of the search | Examiner |
|---|---|---|
| The Hague | 5 February 2026 | Keane, Shane |

**REFERENCES CITED IN THE DESCRIPTION**

**Patent documents cited in the description**

- JP 2019159760 A
- JP 2023544011 A
- JP 2012027880 A
- US 20150377938 A
- US 20200242483 A